# EUROPÄISCHE PATENTSCHRIFT

(11) **EP 1 045 751 B1**
(45) Veröffentlichungstag und Bekanntmachung des Hinweises auf die Patenterteilung: **12.02.2003**
(21) Anmeldenummer: 98963482.9
(22) Anmeldetag: 18.11.1998
(51) Int. Cl.: B29C 43/30, B29C 43/22

(54) **VERFAHREN ZUR HERSTELLUNG VON THERMOFIXIERTEN BAHNEN AUS THERMOPLASTISCHEN POLYMER-MATERIALTEILCHEN**
METHOD FOR PRODUCING THERMOSET WEBS FROM PARTICLES OF THERMOPLASTIC POLYMER MATERIALS
PROCEDE POUR PRODUIRE DES BANDES THERMOFIXEES CONSTITUEES DE PARTICULES DE MATERIAUX POLYMERES THERMOPLASTIQUES

(30) Priorität: 21.11.1997 DE 19751516
(43) Veröffentlichungstag der Anmeldung: 25.10.2000
(73) Patentinhaber: Schilling-Knobel GmbH, 73037 Göppingen (DE)
(72) Erfinder: KNOBEL, Ralf, D-73035 Göppingen (DE)
(74) Vertreter: Fürst, Siegfried
(86) Internationale Anmeldenummer: EP9807409
(87) Internationale Veröffentlichungsnummer: WO99026773

(56) Entgegenhaltungen:
- EP-A- 0 046 526
- EP-A- 0 204 482
- EP-A- 0 226 946
- WO-A-90/06841

## Beschreibung

Die Erfindung betrifft ein Verfahren und eine Anlage zur Herstellung von thermofixierten Bahnen aus zu Teilchen, wie Flakes, Granulat o. dgl. zerkleinerten oder pulverartig zermahlenen thermoplastischen Polymer-Materialteilchen.

Zur Herstellung von Bahnen aus zu Teilchen, wie Schnitzel (Flakes), Krümel (Granulat) o. dgl. zerkleinerten thermoplastischen Polymer-Materialien ist bekannt, daß die Teilchen oder eine Mischung verschiedener Teilchen fortlaufend zu einer flächigen Ausgangsschicht auf ein Transportband aufgeschüttet und diese Ausgangsschicht dann unter nacheinander erfolgender oder gleichzeitiger Anwendung von Wärme und Druck zu einer Bahn verpreßt und verschweißt werden, die anschließend gleich abgekühlt wird.

Zum Herstellen von in sich gemusterten Bahnen aus Kunststoff ist zudem weiter bekannt, ein Gemisch von unter sich verschiedenfarbigen Schnitzeln thermoplastischer Mischungen zu einer Bahn oder in eine einfarbige Bahn einer thermoplastischen Mischung aus- bzw. einzuwalzen und dann eine oder mehrere dieser vorgemusterten Bahnen und eine in der Grundfarbe der vorgemusterten Bahn oder Bahnen gehaltene Bahn aus einer damit verträglichen thermoplastischen Mischung durch Druck- und Wärmeeinwirkung miteinander zu vereinigen und die vereinigte Bahnen in warmen Zustand unter Verringerung der Stärke zu kalandrieren. Ein derartige Herstellung ist beispielsweise in der DE-AS 19 28 405 beschrieben. Diesem Verfahren haftet iedoch als wesentlicher Nachteil an, daß nur Bahnen mit verhältnismäßig geringer Dicke von wenigen Millimetern hergestellt werden können, da das Walzen von Bahnen mit größeren Dicken über 5 mm wegen der Gefahr von Lunkerbildung, d. h. Lufteinschlüssen, erhebliche Schwierigkeiten bereitet. Desweiteren ergibt sich durch die unter Verringerung der Materialstärke erfolgende Kalandrierung zwangsläufig auch eine gerichtete Struktur des Musters der Bahnen in der Kalandrierrichtung und bei starker Kalandrierung besteht überdies die Gefahr, daß sich die Struktur des Musters durch Bildung von Mischfarben mehr oder weniger verwischt. Dieser Mischfarbenund Vormischungseffekt wird bei Einsatz von Teilchen mit unterschiedlicher Schmelzviskosität noch verstärkt.

Zur Herstellung von besagter Bahnen mit nicht gerichteter Musterung hat man daher Techniken unter Vermeidung des Walzens bzw. des Kalandrierens als letzten Schritt der Herstellung der Bahnen bzw. Platten entwickelt-, wie sie beispielsweise in der DE-OS 14 79 090 und der DE-AS 16 79 822 beschrieben sind.

Bei dem zuletzt genannten Verfahren werden thermoplastische Kunststoffschnitzel gleichmäßig zu einem fortlaufenden Stapel aufgeschichtet und im Stapel erwärmt, worauf der Stapel zu einem Rohblock abgeschnitten und in einer Kastenform verpreßt wird. Aus dem verpreßten Block werden dann die gewünschten Platten geschnitten. Mit diesen Verfahren ist es möglich, gemusterte Platten aus kompaktem thermoplastischem Kunststoff mit nicht orientierter Musterung auch unter Ausbildung nur geringer Anteile von Mischfarben zu erhalten. Nachteilig bei diesen Verfahren ist jedoch die diskontinuierliche Arbeitsweise, die kostenaufwendig ist, die Bereitstellung vieler Formen und lange Abkühlzeiten der verpreßten Blöcke erfordert und damit keine rationelle Fertigung zuläßt.

Ein Verfahren zum kontinuierlichen Herstellen von Bahnen mit nicht gerichteter Musterung unter Einsatz von thermoplastischen Kunststoffteilchen ist aus der EP 0 046 526 bekannt, mit dem auch Bahnen größerer kompakter Dicke (1,5 bis 10 mm, vorzugsweise 4 bis 8 mm) unter Vermeidung von Lufteinschlüssen und von Walz- u. Kalandriervorgängen ermöglicht. Bei diesem Verfahren ist im speziellen vorgesehen, daß die aus den thermoplastischen Kunststoffteilchen aufgeschüttete Rohmaterialschicht eine Heizzone durchläuft und hierbei vorgewärmt und dann kontinuierlich beim Durchlaufen einer Behandlungsbereich flächig, vorzugsweise unter Einsatz einer Doppelschwing-Band-Presse, in der Weise abgepretßt wird, daß sie in einer ersten Phase bei Einwirken eines Druckes von bevorzugt 10-60 bar und Erwärmung auf eine Temperatur im Bereich von 160 bis 200 °C verdichtet und verschweißt wird und in einer zweiten, sich direkt anschließenden Phase bei Aufrechterhaltung des Druckes abgekühlt und zugleich auf vorgegebenes Dickenmaß abgepreßt wird.
Die bei diesem Verfahren erfolgende kontinuierlich fortlaufende Flächenpressung zum Verdichten und Verschweißen der thermoplastischen Kunststoffteilchen zu einer Bahn, vermeidet die Nachteile der Linienpressung beim Walzen bzw. Kalandrieren von Bahnen und auch das bisher übliche diskontinuierliche abschnittweise Abpressen. Nachteilig bei diesem zuletzt genannten Verfahren ist jedoch einerseits der große anlagentechnische Aufwand und andererseits die elastizitätsmindernde starke Oberflächenverdichtung der gepreßten Bahn, die durch die über den gesamten Behandlungsbreich bei hohem Druck erfolgende Flächenpressung erzeugt wird.

Daher liegt der Erfindung die Aufgabe zugrunde, ein Verfahren zur kontinuierlichen Herstellung von Bahnen aus thermoplastischen Polymer-Materialteilchen zu schaffen, mit dem besagte Bahnen orientiert und nicht orientiert gemustert herstellbar sind, zudem die Oberflächen der erzeugten Bahnen sehr elastisch ausgebildet werden können sowie der anlagentechnische Aufwand zur Durchführung des Verfahrens verhältnismäßig gering gehalten werden kann.

Die Aufgabe wird erfindungsgemäß durch die im Patentanspruch 1 angegebenen Verfahrensmerkmale gelöst; die nachgeordneten Patentansprüche 2 bis 4 zeigen zudem bevorzugte Weiterbildungen und Ausführungsvarianten des neuen Verfahrens auf. Der Patentanspruch 5 offenbart die wesentlichsten Merkmale einer erfinderisch ausgestallteten Anlage zur Durchführung des neuen Verfahrens; die weiteren Patentansprüche 6 bis 8 vorteilhafte Weiterbildungen der Anlage.

Das neue Verfahren geht von einem Verfahren zur Herstellung von Bahnen aus thermoplastischen Polymer-Materialteilchen aus, bei dem die thermoplastischen Polymer-Materialteilchen, die einen Erweichungspunkt von unter 250 °C besitzen, in Form von Flakes, Granulat o. dgl. Art fortlaufend zu einer flächigen Ausgangsschicht direkt auf ein hitzebeständiges Transportband oder auf ein auf letzterem aufgelegten Trägermaterial, das vorzugsweise die Gestalt einer Rohbahn hat, aufgeschüttet werden und diese Ausgangsschicht dann nacheinander einen Vorwärm-, einen Heiz- und einen Kühlabschnitt eines Behandlungsbereiches durchläuft, wobei die Polymer-Materialteilchen mindestens im Heiz- und im Kühlabschnitt von oben her mit einem zweiten Transportband abgedeckt werden, und ist durch den nachstehenden neuen Verfahrensablauf gekennzeichnet:
a) die mit oder ohne Bindemittel vermischten thermoplastischen Polymer-Materialteilchen werden mit mindestens einem, oberhalb des vorderen freien Bereiches des unteren Transportbandes angeordneten ersten Materialverteiler auf das vorzugsweise vorgewärmte untere Transportband mit vorgegebener Höhe gleichmäßig flächig verteilt;
b) der Abstand des unteren und des oberen Transportbandes zueinander, wird im gesamten Heiz- und Abkühlabschnitt gleich der Dicke der zu fertigenden Bahn gehalten;
c) die flächig aufgeschüttete Ausgangschicht wird mit einer solchen Höhe aufgetragen, daß die thermoplastischen Polymer-Materialteilchen während des gesamten Transportes zwischen dem unteren und dem oberen Transportband, also im Heiz- und im Kühlabschnitt, nur einem Minimaldruck von maximal 0,2 bar ausgesetzt sind, wobei die beiden, nämlich das untere und das obere Transportband in diesen Abschnitten so geführt sind, daß zeitweilige Abweichungen von der vorgegebenen Höhe der Ausgangsschicht keine Überschreitung des festgelegten Minimaldruckes bewirken;
d) im Heizabschnitt erfolgt eine quasi drucklose Verschweißung der thermoplastischen Polymer-Materialtellchen untereinander bzw. mit dem Trägermaterial zu einer thermofixierten Bahn, deren Oberflächen gleichzeitig geglättet werden, und
e) nach dem Heizabschnitt und noch vor Eintritt in den Kühlabschnitt werden die Oberflächen der durch Verschweißung der thermoplastischen Polymer-Materialteilchen erzeugten Bahn durch mindesten ein auf die Transportbänder einwirkendes Walzenpaar ein weiteres mal, jedoch ohne Änderung der vorgegebenen Dicke d, gezielt geglättet.

Der Ablauf des neuen Verfahrens wird nachstehend anhand einer in einer Zeichnung schematisiert dargestellten, zur Verfahrensdurchführung bevorzugt geeigneten Anlage näher beschrieben.

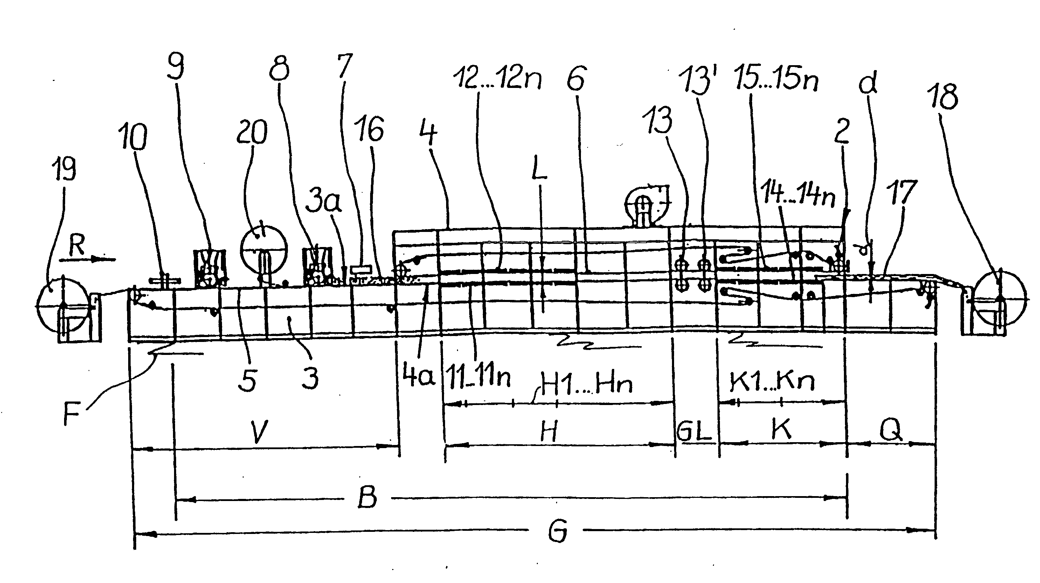

Die Zeichnung zeigt eine Anlage 1 zur Durchführung des Verfahrens nach mindestens einem der Verfahrensansprüche 1 bis 4, mit einem in ein Gehäuseunterteil 3 und in ein Gehäuseoberteil 4 unterteilten Gehäuse 2 von einer Gesamtlänge G auf einer Aufstellfläche F, wobei das Gehäuseoberteil 4 nur von dem Heizabschnitt H bis zum Ende des Kühlabschnittes K reicht, mit jeweils einem vorzugsweise nahtlosen Transportband 5 bzw. 6 in den beiden Gehäuseteilen 3 und 4, die vom Heizabschnitt H bis einschließlich des Kühlabschnittes K übereinander, mit Abstand L einander zugewandt angeordnet sind und dort jeweils in Kontakt mit unteren bzw. oberen Heizelementen 11, ... 11n bzw. 12, ... 12n und Kühlelementen 14, ... 14n bzw. 15, ... 15n stehen und deren Transportbewegung synchron zueinander erfolgt, sowie mit mindestens einem, der Anfangszone des unteren Transportbandes 5 zugeordnetem ersten Materialverteiler 8 und einer am Ende des Gehäuses 2 vorgesehenen Aufwickelvorrichtung 18 für die fertige thermofixierte Bahn 17.
In spezieller neuer Bauart ist an dieser Anlage nun vorgesehen, daß die Führung des oberen Transportbandes 6 in vertikaler Richtung verstell- und festlegbar ist, um jeweils den Abstand L zwischen den Transportbändern 5 und 6 auf die vorgegebene Dicke d der zu fertigenden Bahn 17 einzustellen; zudem ist die besagte Führung des oberen Transportbandes 6 in jeder festgelegten Position des Abstandes L zusätzlich schwimmend gelagert. Weiterhin ist zwischen dem Heizabschnitt H und dem Kühlabschnitt K ein zusätzlicher Glättabschnitt GL, mit mindestens einem auf die Transportbänder 5 und 6 wirkenden Glättwalzenpaar 13, vorgesehen.
In Weiterbildung der erfinderischen Grundlösung sind insbesondere der Heizabschnitt H und wahlweise der Kühlabschnitt K in Förderrichtung R in separat ansteuerbare Heiz- und Kühlzonen H1, ... Hn bzw. K1, ... Kn unterteilt.
Dem Glättwalzenpaar 13 ist ein weiteres Glättwalzenpaar 13' nachgeordnet, daß wahlweise eingeschalten werden kann.
Eine in der Zeichnung nicht dargestellte Weiterbildung besteht noch darin, daß innerhalb des Heizabschnittes H zwischen zwei benachbarten Heizzonen H1/H2 bzw. Hm/Hm mindestens ein weiterer Glättabschnitt mit mindestens einem auf die Transportbänder 5 und 6 wirkenden Glättwalzenpaar vorgesehen ist.

Die Kontaktwärme und die mit gleichmäßiger Geschwindigkeit, synchron laufenden Transportbänder 5 und 6 erlauben den Materialien eine einheitliche Verbindung oder Verklebung / Verschweißung miteinander einzugehen, ohne Faltenbildung oder Materialanhäufungen über die gesamte Breite der gefertigten Bahn.

Mit dem neuen Verfahren durchgeführte Versuche haben eine breite Anwendbarkeit bestätigt. So können vor dem Aufschütten der Polymer-Materialteilchen auf das untere Transportband 5 vorzugsweise fortlaufend aufgelegte poröse Matten und andere Trägergewebe einfach mit thermoplastischen Polymeren oder Mischungen von thermofixierbaren und thermoplastischen Materialien durchtränkt werden. Vorteile sind hier das Glätten und das Eliminieren der Porosität im Gewebe. Desweiteren können sowohl anorganische Materialien als auch Ton, Calciumcarbonat, Glas, Mineralien und sogar vulkanisiertes und unvulkanisiertes Gummimaterial mit den Polymer-Materialien vermischt und durch das neue Verfahren miteinander verbunden werden. Typisch verwendbare Gewebe können aus Polyester, Nylon, Glas, Baumwolle oder einer Vielzahl anderer Textillen oder Polymer-Fasern bestehen. Darüber hinaus können Polymer-Materialien auch als Zweitrücken mit Teppich, z.B. zur Verstärkung, verbunden werden. Eine Vielzahl der Prozesse kann in einem Schritt ("Single pass") durchgeführt werden, da die Transportbänder sowohl von oben als auch von unten die hierfür notwendige Unterstützung gewährleisten. Zum Beispiel ist es möglich ein Glasvlies auf das vorgezogene untere Transportband aufzulegen und ein PVC-Pulver (dry blend) gleichmäßig und mit bestimmter Menge auf diesem zu verteilen. Danach wird eine zweite Schicht, bestehend aus Thermoplastischen Chips, auf das obengenannte Pulver obenauf gestreut und in der neuen Anlage mit dem neuen Verfahren komplett verschmolzen sowie das Glasvlies durchtränkt; wenn es gefordert wird kann eine weitere, z. B. eine dritte Schicht mit einbezogen werden.

Die Variationen der herzustellenden Bahnen sind in keinster Weise beschränkt. So ist das neue Verfahren nebst Anlage zudem auch für Bahnen einsetzbar, deren Elastizität nur gering sein soll. PVC und Polyolefine sind im Speziellen über eine breite Spanne von Variationen des Molekulargewichtes und den Formelzusammenstellungen an das neue Verfahren anpassungsfähig. Daher kann PVC mit einer Kristallinität zwischen 50 und 90% und mit entsprechenden Zusatzstoffsystemen die bis zu 85% anorganische Bindemittel enthalten leicht verarbeitet werden, so daß die erzeugte Bahn beim Verlassen der Anlage sehr hart, steif und unelastisch ist.

Nachstehend werden einige durchgeführte Versuchs-Beispiele beschrieben, die den möglichen, überraschend vielfältigen Einsatz des neuen Verfahrens nebst Anlage zur Durchführung des Verfahrens dokumentieren, wobei bei der Ausführung nach Beispiel I die neue Anlage zur Durchführung des neuen Verfahrens benutzt wurde, jedoch nicht alle Verfahrensschritte des neuen Verfahrens.

### Beispiel I: Laminier-Prozeß

Das Laminier-Beispiel besteht aus einer klaren, kalandrierten PVC-Folie (z.B. 0,5 mm), die mit einem bedruckten, kalandrierten Trägermaterial (z.B. 1,5 mm) beim Durchfahren der Anlage 1 verbunden wurde. Das bedruckte Trägermaterial wurde auf das vorgezogenen untere Transportband aufgelegt. Danach wurde von einem weiteren Rohbahnspender 20 auf dieses Trägermaterial die PVC-Folie abgewickelt und beide Materialien fahren dann gemeinsam in den Behandlungsbereich der Anlage 1 hinein. Zwischen den Transportbändern 5 und 6 wurde der Abstand L als Spalt auf 1,8 mm eingestellt, dieser Spalt war in dem Heizund auch in dem Kühlabschnitt H bzw. K gleich. Die Temperaturen in den Heizzonen H1 bis Hn des Heizabschnittes H waren oben von vorn nach hinten auf drei verschiedene Werte zwischen 105 und 130°C und unten ebenfalls von vorn nach hinten auf drei, jedoch fallende Werte zwischen 160 und 140°C eingestellt. Beide Materialien wurden bei einer Geschwindigkeit von ca. 2 m/min durch die Maschine zum fertigen Produkt laminiert.

### Beispiel II: Chip-Verbindungs -Prozeß

PVC-Chips, im Durchschnitt 1 - 2 mm dick, 0,5 - 3 mm breit und 2 - 5 mm lang, wurden auf Release-Papier gestreut, Streudichte über 3000 g/m². Das Papier mit Streumaterial wurde dann mit einer weiteren Lage des Papiers abgedeckt und durch den Behandlungsbereich B der Anlage 1 gefahren.
Der Abstand L zwischen den beiden Transportbändern 5 und 6 betrug sowohl in dem Heiz- als auch in dem Kühlabschnitt H bzw. K durchgängig 2 mm. Die Temperaturen in den Heizzonen H1 bis Hn betrugen oben von vorn nach hinten 195 - 185 - 175°C und unten durchgehend 200 °C.
Die Bandgeschwindigkeit war auf 2m/min eingestellt.
Am Ende der Anlage 1 war ein dekorativer, homogener Vinyl-Bodenbelag mit einer Dicke von 2 mm entnehmbar.

### Beispiel III: Durchdringungs- und Pulver Verbindungsprozeß (Imprägalerung)

Ein Glasvlies mit der Bezeichnung 'SH 40/2' wurde auf Release-Papier aufgelegt und dann mit einer pulverförmigen Mischung, Streudichte vorzugweise 400g/m², bestreut. Nach dem Bestreuen wurde eine weitere Lage Papier aufgelegt und dann alles zusammen durch den Behandlungsbereich gefahren. Die Bandgeschwindigkeit war auf 2,5m/min eingestellt, bei einem auf die Dicke der Trägermaterialien eingestellten Spalt.
Die Temperaturen in den Heizzonen H1 bis Hn betrug oben von vorn nach hinten 195 -185 - 175 °C und unten durchgehend 195°C.
Am Ende der Anlage 1 war ein vollständig, durchtränktes Glasvlies erzeugt, mit einer glatten Oberfläche auf beiden Seiten. Das Pulver hatte sich total miteinander verbunden und das Glasvlies vollständig eingeschlossen.

### Beispiel IV: Mehrlagiger Verbundwerkstoff in Verbindung mit pulverförmigem Schaumprozeß

Ein Teppichbodenträgermaterial wurde mit der Rückseite nach oben auf Release-Papier auf das untere Transpportband 5 aufgelegt. Ein nicht schäumendes Pulvergemisch wurde auf diese Rückseite des Teppichträgers mit einer Streudichte von vorzugsweise 820g/m² gestreut. Dann wurde von einem weiteren Rohbahnspender ein Glasvlies (40g/m²) darauf gelegt und alles unter einem Vorwärmer, z. B. einem IR-Heizer, der auf 60% seiner Leistung eingestellt war, durchgefahren (v=1 m/min).

Die Temperaturanzeige an einem Strahlungsthermometer zeigte 147° C an. Direkt im Anschluß daran wurde ein pulverförmiger Schaum auf die vorerwärmte Glasvliesunterlage gestreut, Streudichte vorzugsweise um 1000g/m², und nochmals unter einem zweiten IR-Heizer durchgefahren (P=50%, T=130°C, v=1 m/min). Mit einem zweiten Release-Papier obendrauf und erhöhter Bandgeschwindigkeit von 2m/min wurde das mehrlagige Material dann in den Heizabschnitt H ein- und durch die weiteren Abschnitte des Behandlungsbereiches B hindurchgefahren. Der Abstand zwischen den Transportbändern 5 und 6 wurde bei diesem speziell abgewandelten Ausführungsbeispiel für den Heizabschnitt H auf 8,5 mm und für den Kühlabschnitt auf 10 mm gestellt. Die Temperaturen in den Heizzonen H1 bis Hn waren oben von vorn nach hinten zwischen 220 und - 200 °C fallend und unten durchgehend auf 90 °C eingestellt.
Die verschiedenen Lagen dieses speziellen (Teppich-) Belages hatten unter einander eine sehr gute Verbindung und auf der Rückseite war eine Schaumschicht von 2 mm Dicke entstanden. Die Ausdehnung des Schaums lag im Verhältnis 2:1.
Der entscheidende Punkt bei diesem Ausführungsbeispiel war aber, daß es mit dem neuen Verfahren möglich ist, in einem Durchlauf gleichzeitig einen Verbindungsprozeß und einen Schäumungsprozeß durchzuführen.

### Beispiel V: Mehrlagiger Verbundwerkstoff in Verbindung mit Recyclingmaterial-Prozeß

Ein Teppichbodenträgermaterial wurde mit der Rückseite nach oben auf Release-Papier auf das Unterband gelegt. Ein nicht schäumendes Pulvergemisch wurde auf diese Rückseite des Teppichträgers mit einer Streudichte von 820 g/m² gestreut. Dann wurde von einer Abwickelstation ein Glasvlies (40 g/m2) darauf gelegt und unter einem IR-Heizer mit 50% seiner Leistung durchgefahren (v=1m/min). Die Temperaturanzeige an einem Strahlungsthermometer zeigte 146°C an. Ein Granulat aus recyceltem Material wurde dann auf das Glasvlies mit einer Streudichte von über 2500 g/m² gestreut. Nach der Bestrahlung mit einem zweiten IR-Heizer und einer abgelesenen Temperatur von 82°C wurde die Geschwindigkeit auf 2m/min erhöht, eine zweites Papier aufgelegt und in den Heizabschnitt H eingefahren. Der Spaltabstand zwischen den Transportbändern betrug beim durchfahren der Heiz- und Kühlzone jeweils 8mm. Die Temperatur oben betrug durchgehend > 200 °C und unten durchgehend < 130 °C in allen Heizzonen. Es entstand ein Produkt, welches zwischen allen Lagen eine sehr gute Verbindung eingegangen war, ohne die Oberfläche der Teppichs zu beschädigen. In diesem Prozeß wurden mehrere Schritte in einem Durchgang unter Verwendung von 100% recyceltem Material für die verfestigte Rückseite ausgeführt.
Desweiteren wurde derselbe Versuch mit einem zum Granulat identischen Pulver und unter den selben Bedingungen durchgeführt. Das erzielte Ergebnis war gleichwertig.

### Bezugsziffernverzeichnis

- 1: Anlage
- 2: Gehäuse
- 3: Gehäuseunterteil
- 3a: obere Fläche
- 4: Gehäuseoberteil
- 4a: untere Fläche
- 5: unteres Transportband
- 6: oberes Transportband
- 7: erster Vorwärmer (z.B. Infrarotstrahler)
- 8: erster Materialverteiler
- 9: zweiter Materiatverteiler
- 10: zweite Vorwärmer (z.B. Infrarotstrahler)
- 11, ... 11n: untere Heizelemente
- 12, ... 12n: obere Heizelemente
- 13, 13': Glättwalzen
- 14, ... 14n: untere Kühlelemente
- 15, ... 15n: obere Kühlelemente
- 16: Ausgangsschicht
- 17: Bahn
- 18: Aufwickelvorrichtung
- 19: erster Rohbahnspender
- 20: zweiter Rohbahnspender
- B: Behandlungsbereich
- d: Dicke der fertigen Bahn
- H: Heizabschnitt
- H1, ... Hn: Heizzonen
- F: Fußboden (Aufstellfläche)
- G: Gesamtlänge
- GL: Glättabschnitt
- K: Kühlabschnitt
- K1, ... Kn: Kühlzonen
- L: Abstand zwischen unterem und oberem Transportband innerhalb des Behandlungsbereiches B
- Q: Kontrollabschnitt
- R: Förderrichtung
- V: Auftrag- und Vorwärmabschnitt

## Patentansprüche

1. Verfahren zur Herstellung von thermofixierten Bahnen aus thermoplastischen Polymer-Materialteilchen, bei dem die thermoplastischen Polymer-Materialteilchen in Form von Flakes, Granulat o. dgl. Art und oder Pulver fortlaufend zu einer flächigen Ausgangsschicht direkt auf ein hitzebeständiges Transportband oder auf ein auf letzterem aufgelegten Trägermaterial, daß vorzugsweise die Gestalt einer Rohbahn hat, aufgeschüttet werden und diese Ausgangsschicht dann nacheinander einen Vorwärm-, einen Heiz- und einen Kühlabschnitt eines Behandlungsbereiches durchläuft, wobei die Polymer-Materialteilchen mindestens im Heizund im Kühlabschnitt von oben her mit einem zweiten Transportband abgedeckt werden,
**gekennzeichnet durch** folgende Verfahrensschritte,
a) die mit oder ohne Bindemittel vermischten thermoplastischen Polymer-Materialteilchen werden mit mindestens einem oberhalb des vorderen, nicht abgedeckten Bereiches des unteren Transportbandes (5) angeordneten ersten Materialverteilers auf das vorzugsweise vorgewärmte untere Transportband (5) in vorgegebener Höhe gleichmäßig flächig aufgeschüttet;
b) der Abstand des unteren (5) und des oberen (6) Transportbandes zueinander, wird Im gesamten Heiz- und Abkühlabschnitt (H und K) gleich der Dicke (d) der fertigen Bahn (17) gehalten;
c) die flächig aufgeschüttete Ausgangschicht (16) wird mit einer solchen Höhe aufgetragen,
daß die thermoplastischen Polymer-Materialteilchen während des gesamten Transportes zwischen dem unteren (5) und dem oberen (6) Transportband, also im Heiz- und im Kühlabschnitt (H und K), nur einem Minimaldruck von maximal 0,2 bar ausgesetzt sind, wobei die belden Transportbänder (5 und 6) in diesen Abschnitten (H und K) so geführt sind, daß zeitweilige Abweichungen von der vorgegebenen Höhe der Ausgangsschicht keine Überschreitung des Minimaldruckes bewirken;
d) im Heizabschnitt (H) erfolgt eine quasi drucklose Verschweißung der thermoplastischen Polymer-Materlalteilchen untereinander bzw. mit dem Trägermaterial zu einer thermofixierten Bahn (17), die gleichzeitig einer Oberflächenglättung unterzogen wird, und
e) nach dem Heizabschnitt (H ) und noch vor dem Kühlabschnitt (K) werden die Oberflächen der **durch** Verschweißung der thermoplastischen Polymer-Materialteilchen erzeugten Bahn (17 ) **durch** mindesten ein jeweils auf das untere und obere Transportband (5 und 6) wirkende Walzenpaar (13 bzw. 13') ein weiteres mal geziett geglättet.

2. Verfahren nach Anspruch 1,
**dadurch gekennzeichnet,**
**daß** die im Heizabschnitt (H) zur erzeugten Bahn (17 ) ineinander fließenden und untereinander verschmelzenden thermoplastischen Polymer-Materialteile zumindest im Heizabschnitt (H) mehrere Temperaturzonen (H1, ... Hn) durchlaufen, deren Temperaturen voneinander verschieden sein können und vorzugsweise separat regelbar sind.

3. Verfahren nach Anspruch 1 oder 2,
**dadurch gekennzeichnet,**
**daß** die erzeugte Bahn (17 ) im Kühlabschnitt (K ) ebenfalls mehrere Temperaturzonen (K1, ... Kn) durchläuft, deren Temperaturen voneinander verschieden sein können und vorzugsweise separat regelbar sind.

4. verfahren nacn Anspruch 2 und/oder 3,
**dadurch gekennzeichnet,**
**daß** die Temperaturzonen (H1, ... Hn bzw. K1, ... Kn) zusätzlich jeweils in untere und obere Temperaturzonen unterteilt sind.

5. Anlage zur Durchführung des Verfahrens nach mindestens einem der Patentansprüche 1 bis 4, mit einem in ein Gehäuseunterteil (3) und in ein Gehäuseoberteil (4) unterteilten Gehäuse (2) von einer Gesamtlänge (G), wobei das Gehäuseoberteil (4) nur von dem Heizabschnitt (H) bis zum Ende des Kühlabschnittes (K) reicht, mit jeweils einem vorzugsweise nahtlosen Transportband (5 bzw. 6) In den beiden Gehäuseteilen (3 und 4), die vom Heizabschnitt (H) bis einschließlich des Kühlabschnittes (K) übereinander, mit Abstand (L) einander zugewandt angeordnet sind und dort jeweils in Flächenkontakt mit unteren bzw. oberen Heizelementen (11, ... 11n bzw. 12, ... 12n) und Kühlelementen (14, ... 14n bzw. 15, ... 15n) stehen und deren Transportbewegung synchron zueinander erfolgt, sowie mit mindestens einem der Anfangszone des unteren Transportbandes (5) zugeordnetem ersten Materialverteiler (8) und einer am Ende des Gehäuses (2) vorgesehenen Aufwickelvorrichtung (18) für die fertige Bahn (17),
**dadurch gekennzeichnet,**
**daß** die Führung des oberen Transportbandes (6) in vertikaler Richtung verstell- und festlegbar ist, um jeweils den Abstand (L) zwischen den Transportbändern (5 und 6) auf die vorgegebene Dicke (d) der zu fertigenden Bahn (17) einzustellen,
**daß** die besagte Führung des oberen Transportbandes (6) in jeder festgelegten Position des Abstandes (L) zusätzlich schwimmend gelagert ist, und,
**daß** zwischen dem Heizabschnitt (H) und dem Kühlabschnitt (K) ein zusätzlicher Glättabschnitt (GL), mit mindestens einem auf die Transportbänder (5 und 6) wirkenden Glättwalzenpaar (13) vorgesehen ist.

6. Anlage nach Anspruch 5,
**dadurch gekennzeichnet,**
**daß** insbesondere der Heizabschnitt (H) und wahlweise der Kühlabschnitt (K) In Förderrichtung ( R) gesehen in separat ansteuerbare Heiz- und Kühlzonen (H1, ... Hn bzw. K1, ... Kn) unterteilt ist.

7. Anlage nach einem der Ansprüche 5 und 6,
**dadurch gekennzeichnet,**
**daß** dem Glättwatzenpaar (13) ein weiteres Glättwalzenpaar (13') nachgeordnet ist, daß wahlweise eingeschalten werden kann.

8. Anlage nach einem der Ansprüche 5 bis 7,
**dadurch gekennzeichnet,**
**daß** innerhalb des Heizabschnittes (H) zwischen zwei benachbarten Heizzonen (H1/H2 bzw. Hm/Hn) mindestens ein weiterer Glättabschnitt mit mindestens einem auf die Transportbänder (5 und 6) wirkenden Glättwalzenpaar vorgesehen ist.

## Claims

1. Method of producing thermofixed webs of thermoplastic polymer material particles, in which the thermoplastic polymer material particles in the form of flakes, granulate or of like kind and/or powder are continuously deposited to form a flat starting layer directly on a heat-resistant transport belt or on a carrier material placed on the latter, which preferably has the form of a raw web, and this starting layer then runs through in succession a preheating section, a heating section and a cooling section of a treatment region, wherein the polymer material particles are covered from above by a second transport belt at least in the heating section and the cooling section, **characterised by** the following method steps:
a) the thermoplastic polymer material particles mixed or not mixed with binder are deposited uniformly in terms of area to predetermined height on the preferably preheated lower transport belt (5) by at least one first material distributor arranged above the forward, uncovered region of the lower transport belt (5);
b) the spacing of the lower transport belt (5) from the upper transport belt (6) is kept equal to the thickness (d) of the finished web (17) in the entire heating and cooling section (H and K);
c) the areally deposited starting layer (16) is coated to such a height that the thermoplastic polymer material particles during the entire transport between the lower transport belt (5) and the upper transport belt (6), thus in the heating section and cooling section (H and K), are subjected only to a minimum pressure of at most 0.2 bar, wherein the two transport belts (5 and 6) in the sections (H and K) are so guided that temporary departures from the predetermined height of the starting layer do not cause an exceeding of the minimum pressure;
d) a quasi pressureless welding of the thermoplastic polymer material particles with one another or with the carrier material to form a thermofixed web (17), which is simultaneously subjected to a surface smoothing, takes place in the heating section (H) and
e) after the heating section (H) and still before the cooling section (K) the surfaces of the web (17) produced by welding of the thermoplastic polymer material particles are smoothed in targeted manner a further time by at least one roller pair (13 or 13') respectively acting on the lower and upper transport belt (5 and 6).

2. Method according to claim 1, **characterised in that** the thermoplastic polymer material parts flowing into one another and melting together into the produced web (17) in the heating section (H) pass through several heating zones (H1, ... Hn), the temperatures of which can differ from one other and preferably are capable of being separately regulated, at least in the heating section (H).

3. Method according to claim 1 or 2, **characterised in that** the produced web (17) similarly passes through several temperature zones (K1, ... Kn), the temperatures of which can differ from one another and are preferably capable of being separately regulated, in the cooling section (K).

4. Method according to claim 2 and/or 3, **characterised in that** the temperature zones (H1, ... Hn or K1, ... Kn) are additionally divided into respective lower and upper temperature zones.

5. Plant for carrying out the method according to at least one of claims 1 to 4, with a housing (2), which is subdivided into a housing lower part (3) and a housing upper part (4), of an overall length (G), wherein the housing upper part (4) extends only from the heating section (H) to the end of the cooling section (K), with a respective, preferably seamless, transport belt (5 or 6) in the two housing parts (3 and 4), which are arranged one above the other from the heating section (H) up to and including the cooling section (K) and facing one another at a spacing (L) and are there disposed in surface contact respectively with lower and upper heating elements (11, ... 11n or 12, ... 12n) and cooling elements (14, ... 14n or 15, ... 15n) and the transport movement of which is carried out synchronously with one another, as well as with at least one first material distributor (8) associated with the starting zone of the lower transport belt (5) and a reeling-up device (18), which is provided at the end of the housing (2), for the finished web (17), **characterised in that** the guidance of the upper transport belt (6) is adjustable and fixable in vertical direction in order to set the respective spacing (L) between the transport belts (5 and 6) to the predetermined thickness (d) of the web (17) to be produced, that the said guidance of the upper transport belt (6) is in addition mounted in floating manner in each fixed position of the spacing (L) and that an additional smoothing section (GL) with at least one smoothing roller pair (13) acting on the transport belts (5 and 6) is provided between the heating section (H) and the cooling section (K).

6. Plant according to claim 5, **characterised in that** particularly the heating section (H) and selectably the cooling section (K) are divided into separately controllable heating and cooling zones (H1, ... Hn or K1, ... Kn) as seen in conveying direction (R).

7. Plant according to one of claims 5 and 6, **characterised in that** a further smoothing o roller pair (13'), which can be selectably switched in, is arranged downstream of the smoothing roller pair (13).

8. Plant according to one of claims 5 to 7, **characterised in that** at least one further smoothing section with at least one smoothing roller pair acting on the transport belts (5 5 and 6) is provided within the heating section (H) between two adjacent heating zones (H1/H2 or Hm/Hn).

## Revendications

1. Procédé pour produire des bandes thermofixées constituées de particules de matériaux polymères thermoplastiques, dans lequel lesdites particules de matériaux polymères thermoplastiques sont directement déversées en permanence, sous la forme de flocons, d'un granulat ou d'une structure similaire, et/ou d'une poudre, pour obtenir une couche initiale plane, sur une bande transporteuse résistant à la chaleur ou sur un matériau substrat déposé sur cette dernière et préférentiellement configuré en une bande brute, et cette couche initiale parcourt ensuite successivement un tronçon de préchauffage, un tronçon de chauffage et un tronçon de refroidissement d'une zone de traitement, les particules de matériaux polymères étant recouvertes de haut en bas par une seconde bande transporteuse, au moins dans les tronçons de chauffage et de refroidissement,
**caractérisé par** les étapes opératoires suivantes :
a) les particules de matériaux polymères thermoplastiques, mélangées ou non à un liant, sont répandues à plat de manière uniforme, à une hauteur préétablie, sur la bande transporteuse inférieure (5) de préférence préchauffée, à l'aide d'au moins un premier répartiteur de matière situé au-dessus de la région antérieure non recouverte de ladite bande transporteuse inférieure (5);
b) la distance mutuelle entre les bandes transporteuses inférieure (5) et supérieure (6) est maintenue, dans l'intégralité des tronçons de chauffage et de refroidissement (H et K), égale à l'épaisseur (d) de la bande (17) achevée ;
c) la couche initiale (16) déversée à plat est déposée selon une hauteur telle que les particules de matériaux polymères thermoplastiques soient uniquement exposées à une pression minimale de 0,2 bar au maximum, durant tout le transport entre les bandes transporteuses inférieure (5) et supérieure (6), c'est-à-dire dans les tronçons de chauffage et de refroidissement (H et K), les deux bandes transporteuses (5 et 6) étant guidées, dans ces tronçons (H et K), de façon telle que des écarts survenant de temps à autre, vis-à-vis de la hauteur préétablie de la couche initiale, ne provoquent aucun dépassement de la pression minimale ;
d) il s'opère, dans le tronçon de chauffage (H), un soudage quasi exempt de pression, solidarisant respectivement les particules de matériaux polymères thermoplastiques les unes avec les autres ou avec le matériau substrat, pour obtenir une bande thermofixée (17) qui est simultanément soumise à un lissage superficiel, et
e) après le tronçon de chauffage (H), et avant même le tronçon de refroidissement (K), les surfaces de la bande (17) engendrée par soudage des particules de matériaux polymères thermoplastiques sont, une nouvelle fois, adéquatement lissées par au moins une paire de cylindres (13, respectivement 13') agissant, respectivement, sur les bandes transporteuses inférieure et supérieure (5 et 6).

2. Procédé selon la revendication 1,
**caractérisé par le fait**
**que** les particules de matériaux polymères thermoplastiques, solidarisées par fusion et fluant les unes dans les autres dans le tronçon de chauffage (H), pour donner la bande produite (17), parcourent, au moins dans ledit tronçon de chauffage (H), plusieurs zones de température (H1, ... Hn) dont les températures peuvent être différentes les unes des autres et sont, de préférence, régulables séparément.

3. Procédé selon la revendication 1 ou 2,
**caractérisé par le fait**
**que** la bande produite (17) parcourt semblablement, dans le tronçon de refroidissement (K), plusieurs zones de température (K1, ... Kn) dont les températures peuvent être différentes les unes des autres et sont, de préférence, régulables séparément.

4. Procédé selon la revendication 2 et/ou 3, **caractérisé par le fait**
**que** les zones de température (H1, ... Hn, respectivement K1, ... Kn) sont respectivement subdivisées, en plus, en des zones de température inférieures et supérieures.

5. Installation pour la mise en oeuvre du procédé selon au moins l'une des revendications 1 à 4, comprenant un carter (2) d'une longueur totale (G), scindé en une partie inférieure (3) et en une partie supérieure (4), ladite partie supérieure (4) du carter s'étendant uniquement depuis le tronçon de chauffage (H) jusqu'à l'extrémité du tronçon de refroidissement (K) ; une bande transporteuse (5, respectivement 6) préférentiellement d'une seule pièce, située dans les deux parties (3 et 4) du carter, lesdites bandes étant agencées en superposition, à distance (L) l'une en regard de l'autre, depuis le tronçon de chauffage (H) jusques et y compris dans le tronçon de refroidissement (K), dans lesquels elles sont respectivement en contact superficiel avec des éléments de chauffage (11, ... 11n, respectivement 12, ... 12n) et des éléments de refroidissement (14, ... 14n, respectivement 15, ... 15n) respectivement inférieurs et supérieurs, le mouvement de transport desdites bandes étant réciproquement synchrone; ainsi qu'au moins un premier répartiteur de matière (8), associé à la région initiale de la bande transporteuse inférieure (5), et un dispositif enrouleur (18) affecté à la bande (17) achevée, prévu à l'extrémité du carter (2),
**caractérisée par le fait**
**que** le guidage de la bande transporteuse supérieure (6) est réglable et arrêtable dans le sens vertical afin d'ajuster la distance (L), respectivement comprise entre les bandes transporteuses (5 et 6), sur l'épaisseur préétablie (d) de la bande (17) devant être produite, que le guidage précité de la bande transporteuse supérieure (6) est additionnellement monté flottant dans chaque position arrêtée de la distance (L), et
**qu'**un tronçon supplémentaire de lissage (GL), comportant au moins une paire de cylindres de lissage (13) agissant sur les bandes transporteuses (5 et 6), est prévu entre le tronçon de chauffage (H) et le tronçon de refroidissement (K).

6. Installation selon la revendication 5, **caractérisée par le fait**
**que** notamment le tronçon de chauffage (H), et sélectivement le tronçon de refroidissement (K), sont scindés, observés dans la direction de convoyage (R), en des zones de chauffage et de refroidissement (H1, ... Hn, respectivement K1, ... Kn) activables séparément.

7. Installation selon l'une des revendications 5 et 6, **caractérisée par le fait**
**qu'**en aval de la paire de cylindres de lissage (13) est disposée une paire supplémentaire de cylindres de lissage (13'), qui peut être sélectivement enclenchée.

8. Installation selon l'une des revendications 5 à 7, **caractérisée par le fait**
**qu'**au moins un tronçon additionnel de lissage, comportant au moins une paire de cylindres de lissage agissant sur les bandes transporteuses (5 et 6), est prévu à l'intérieur du tronçon de chauffage (H) entre deux zones de chauffage (H1/H2, respectivement Hm/Hn) voisines.
